# EUROPEAN PATENT SPECIFICATION

(11) **EP 0 407 700 B1**
(45) Date of publication and mention of the grant of the patent: **03.11.1993**
(21) Application number: 90108560.5
(22) Date of filing: 07.05.1990
(51) Int. Cl.: E04D 5/12, E04B 1/66, B32B 5/00

(54) **Waterproof sheet for concrete structures**
Wasserdichte Platte für Betonbauten
Couche imperméable pour constructions en béton

(30) Priority: 11.07.1989 JP 178352/89
(43) Date of publication of application: 16.01.1991
(73) Proprietor: KOKEN KAIHATSU CO., LTD., Tokyo 107 (JP)
(72) Inventor: Anno, Takamitsu, Mitaka-shi, Tokyo 181 (JP); Katsukawa, Kanji, Yokohama-shi, Kanagawa-ken 230 (JP)
(74) Representative: Goddar, Heinz J., Dr.

(56) References cited:
- FR-A- 2 211 957
- FR-A- 2 513 282
- US-A- 2 286 145
- US-A- 2 890 663
- JAPANESE PATENT GAZETTE, section Ch, week 7232, class A, page 1, no. 72-50890T/32, Derwent Publications Ltd, London, GB; & JP-A-47 013 679 (IKENO K.)

## Description

The present invention relates to a combination of a concrete structure and a waterproofing sheet as well as to a method for coating a concrete structure with a waterproofing sheet in accordance with the features of the preamble of claim 1 and 3, respectively.

Waterproofing sheets are already known in the art and for example discussed in Japanese Patent Gazette, section Ch, week 7232, class A, page 1, no. 72-50890 T/32 disclosing an inorganic powder, such as metal powder, glass powder, cement powder, powdered pebble, carbon powder and the like applied to a surface of a thermoplastic resin, whereby this inorganic powder covers said thermoplastic resin for beautifying and protecting the surface of the same. But this conventional waterproofing sheet does not integrally attach to the concrete structure to which it is applied leading to damages of the waterproofing sheet in the case that the concrete structure cracks.

Another waterproofing sheet for an engineering and construction structure has been proposed by the applicant and disclosed in Japanese Patent Publication No. 46-35337. This waterproof sheet is illustrated in Fig. 4 and comprises a sheet made of a thermoplastic synthetic resin and a filament such as asbestos, glass, polyamide, etc. or powder such as pumice, vermiculite, slag, glass. The filament or powder is partially intruded into and adhered to the waterproof sheet with a slight interval being provided between the filament or powder and the waterproof sheet. A drawback of this waterproof sheet is that the waterproof sheet is not always adhered to the surface of the concrete structure with uniformity and integration since the proposed waterproof sheet is adhered physically thereto with an intermediate filament or powder therebetween.

Methods for applying coatings to sheets are also already known and for example given in US-A-2890663 and US-A-2286145. The conventional coating method is illustrated in Fig. 3 and comprises the steps of preparing a sheet 2 by a thermoplastic resin at a mold, feeding the sheet 2 from the mold toward a portion where a pair of clamping rollers 4, 4' are rotated inward and pressed against each other, feeding powder 3 of cement from a hopper 5 over a circumferential surface of one of the pair of clamping rollers 4, 4'. The rollers 4, 4' are each provided with a rubber at the circumferential surface thereof. The cement powder 3 may be fed from the hopper 5 over circumferential surfaces of both of the pair of clamping rollers 4, 4'.

It is an object of the present invention to provide a combination of a concrete structure and a waterproofing sheet as well as a method for coating a concrete structure with a waterproofing sheet ensuring a waterproofing of the concrete structure while eliminating additional adhesives.

It is a further object of the present invention to adhere chemically the waterproofing sheet to the surface of the concrete structure with uniformal integration utilizing the chemical change of cement powder by pressing the waterproofing sheet against said concrete structure.

According to the present invention the above mentioned objects are achieved by fulfilling the features of the characterizing part of claim 1 and 3, respectively.

Preferred embodiments of the present invention are described by the dependent claims 2 and 4.

The above and other objects, features and advantages of the present invention will become more apparent from the following description taken in conjunction with the accompanying drawings.
Fig. 1 is a partly enlarged cross sectional view of a waterproof sheet for concret structures according to a first embodiment of the present invention;
Fig. 2 is a partly enlarged cross sectional view of a waterproof sheet for concrete structures according to a second embodiment of the present invention;

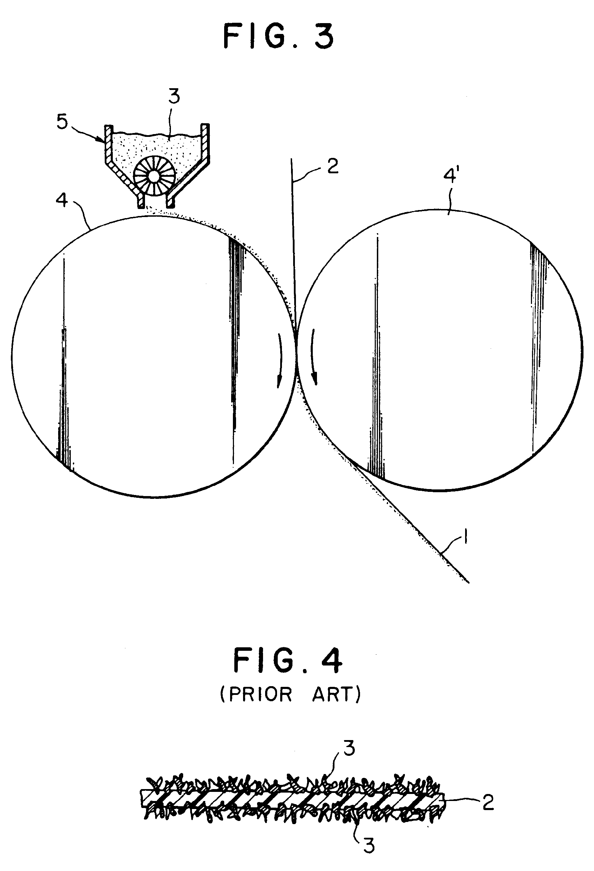

Fig. 3 is a view of assistance in explaining a conventional method of manufacturing a waterproof sheet for concrete structures of Fig. 1; and
Fig. 4 is a partly enlarged cross sectional view of a conventional waterproof sheet for concrete structures.

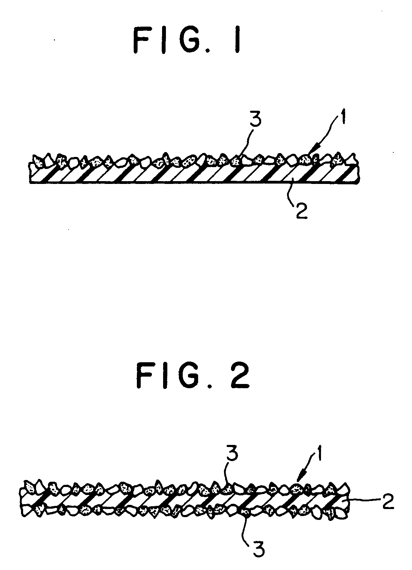

A waterproof sheet for concrete structures according to a preferred embodiment will be described with reference to Figs. 1 to 2.

In Fig. 1, the waterpoof sheet 1 for concrete structures comprises a sheet 2 made of a thermoplastic synthetic resin and powder 3 of cement which is pressed against the sheet 2 and adhered to one side surface of the sheet 2. Powder 3 of cement may be pressed against and adhered to both side surfaces of the sheet 2.

In Fig. 2, powder 3 is pressed against the sheet 2 and adhered to both side surfaces of the waterproof sheet 2.

A method of applying a waterproof sheet to concrete structures according to the present invention comprises the steps of forming a cement paste layer over the surface of the concrete structure, covering the cement paste layer by the sheet 2 in the manner that powder 3 of the sheet 2 is brought into contact with the cement paste layer. Powder 3 is changed chemically by water contained in the cement paste layer whereby the waterproof sheet 1 and the cement paste layer are uniformly and integrally combined with each other. Hence, the concrete structure is waterproofed with certainty.

The sheet 2 covering the cracked portion of the concrete structure can be elastically freely stretched since the cement powder 3 is adhered to the sheet 2 by close spot-contact with the sheet 2, hence it is possible to prevent water form entering into cracked portions.

In as much as the waterproof sheet according to the present invention comprises only two constitutions, namely, the synthetic sheet and the cement powder, it is possible to form a stable waterproof layer, when covering the concrete structure, with simple structure compared with the waterproof layer formed by the conventional sheet adhered to the surface of the concrete structure by adhesives.

Furthermore, in as much as the waterproof sheet is capable of being adhered chemically to the surface of the concrete structure by utilizing the chemical change of the cement powder, the surface of the sheet is solidified integrally with the cement paste layer of the concrete structure, it is possible to adhere the sheet to the surface of the concrete structure more stably, firmly and integrally.

In addition, there is no water channel produced between the sheet and the cement paste layer. In the case that the waterproof sheet having powder at both sides thereof is adhered to the surface of the concrete structure, there does not occure such a phenomenon that a parapet is pushed down by a conventional waterproof protection layer.

Still furthermore, in as much as the cement powder is closely adhered to the sheet by spot-contact with the sheet differing from that the conventional adhesives adhered to the sheet by surface-contact with the sheet, the sheet cannot be cut off but is elastically stretched even if the concrete structure cracked, hence the waterproof sheet is closely adhered to the surface of the concrete structure for preventing the water from entering into cracked portions of the surface of concrete structure.

A protective mortar layer is formed on the other surface of the sheet which is integrated with the cement paste layer at one surface of the sheet, whereby the protective mortar layer is firmly and integrally combined with the sheet.

Although the invention has been described in its preferred form with a certain degree of particularity, it is to be understood that many variations and changes are possible in the invention without departing from the scope thereof, and these are described in the attached claims

## Claims

1. A combination of a concrete structure and a waterproofing sheet comprising a waterproof, thermoplastic synthetic resin sheet (2) and at least one continuous layer consisting essentially of individual cement particles (3) partially embedded in, adhered to and in spot contact with said waterproof sheet, said one continuous layer covering substantially the entirety of one surface of said waterproof sheet with at least parts of said particles (3) projecting above said surface,
characterized in that
said cement powder (3) is chemically reactive with water and changed by calcium oxide action to generate the function of an adhesive agent so that said waterproof sheet (2) is uniformly and integrally adhered to and combined with the surface of said concrete structure to waterproof the same, and that said sheet (2) is elastically stretchable so that it remains in contact with the surface of said concrete structure if the concrete structure becomes cracked.

2. A combination according to claim 1, characterized in that there are provided two of said continuous layers, each layer covering one side of the waterproof sheet (2).

3. A method for coating a concrete structure with a waterproofing sheet comprising the steps of forming a cement paste layer over the surface of the concrete structure and covering said cement paste layer with said waterproofing sheet in that manner that powder of said sheet is brought into contact with said cement paste layer,
characterized in that
said cement powder (3) is changed chemically by water contained in the cement paste layer whereby the waterproofing sheet (1) and the concrete structure are uniformly and integrally combined with each other.

4. A method according to claim 3, characterized in that said waterproofing sheet (1) comprises a layer of said powder (3) on both sides thereof, whereby a mortar layer is formed on that surface of said sheet (1) not being in contact with said concrete structure.

## Patentansprüche

1. Kombination aus einem Betonaufbau und einer Abdichtungsplatte, die eine wasserdichte, thermoplastische Kunstharzplatte (2) und zumindest eine kontinuierliche Schicht umfaßt, die im wesentlichen aus individuellen Zementpartikeln (3) besteht, die teilweise eingebettet in, angeheftet an und in Punktkontakt mit besagter Abdichtungsplatte sind, wobei besagte eine kontinuierliche Schicht im wesentlichen eine Fläche von besagter Abdichtungsplatte komplett so bedeckt, daß zumindest Teile von besagten Partikeln (3) über besagte Fläche hinausragen,
dadurch gekennzeichnet, daß
besagtes Zementpuder (3) chemisch reaktiv mit Wasser und durch Kalziumoxydeinwirkung veränderbar ist, um die Funktion eines Klebemittels zu entwickeln, so daß besagte wasserdichte Platte (2) uniform und vollständig anhaftend an und verbunden mit der Oberfläche besagten Betonaufbaus ist, um denselben wasserdicht zu machen, und daß besagte Platte (2) elastisch dehnbar ist, so daß sie in Kontakt mit der Fläche besagten Betonaufbaus bleibt, wenn der Betonaufbau Risse bekommt.

2. Kombination nach Anspruch 1, dadurch gekennzeichnet, daß zwei von besagten kontinuierlichen Schichten bereitgestellt sind, wobei jede Schicht eine Seite der wasserdichten Platte (2) bedeckt.

3. Verfahren zum überdecken eines Betonaufbaus mit einer Abdichtungsplatte, das die Schritte des Bildens einer Zementbreischicht über der Fläche des Betonaufbaus und des Bedeckens besagter Zementbreischicht mit besagter wasserdichten Platte so umfaßt, daß Puder besagter Platte in Kontakt mit besagter Zementbreischicht gebracht wird,
dadurch gekennzeichnet, daß
besagtes Zementpuder (3) chemisch durch Wasser, das in der Zementbreischicht enthalten ist, verändert wird, wodurch die Abdichtungsplatte (1) und der Betonaufbau uniform und vollständig miteinander verbunden werden.

4. Verfahren nach Anspruch 3, dadurch gekennzeichnet, daß besagte Abdichtungsplatte (1) eine Schicht von besagtem Puder (3) auf ihren beiden Seiten umfaßt, wobei eine Mörtellage auf der Fläche besagter Platte (1) gebildet wird, die nicht in Kontakt mit besagtem Betonaufbau steht.

## Revendications

1. Combinaison d'une structure en béton et d'une feuille étanche à l'eau, comprenant une feuille en résine synthétique thermoplastique (2) étanche à l'eau, et au moins une couche continue, consistant essentiellement en des particules de ciment (3) individuelles partiellement noyées dans, adhérant à et en contact ponctuel avec ladite feuille étanche à l'eau, ladite couche continue recouvrant pratiquement toute une surface de ladite feuille étanche à l'eau, au moins certaine partie desdites particules (3) faisant saillie au-dessus de la dite surface,
caractérisé en ce que la dite poudre de ciment (3) réagit chimiquement avec l'eau et subit une modification sous l'action d'oxyde de calcium, pour exercer la fonction d'agent adhésif, de manière que ladite feuille étanche à l'eau (2) adhére uniformément et totalement et soit combinée avec la surface de ladite structure en béton, pour la rendre étanche à l'eau, et en ce que ladite feuille (2) peut s'étirer élastiquement, de manière qu'elle reste en contact avec la surface de la dite structure en béton, si la structure en béton se fissure.

2. Combinaison selon la revendication 1, caractérisée en ce que deux desdites couches continues sont prévues, chaque couche recouvrant un côté de la feuille étanche à l'eau (2).

3. Procédé pour revêtir une structure en béton avec une feuille étanche à l'eau, comprenant les étapes de formation d'une couche de pâte de ciment sur la surface de la structure en béton et de recouvrement de ladite couche de pâte de ciment avec ladite feuille étanche à l'eau, de manière que la poudre de ladite feuille soit mise en contact avec ladite couche de pâte de ciment,
caractérisé en ce que
ladite poudre de ciment (3) subit une modification chimique sous l'effet de l'eau contenue dans la couche de pâte de ciment, de sorte que la feuille étanche à l'eau (1) et la structure en béton sont combinées entre elles uniformément et intégralement.

4. Procédé selon la revendication (3), caractérisé en ce que ladite feuille étanche à l'eau (1) comprend sur ses deux faces une couche de ladite poudre (3), de sorte qu'une couche de mortier est formée sur la face de ladite feuille (1) qui n'est pas en contact avec ladite structure de béton.
